# EUROPÄISCHE PATENTANMELDUNG

(11) **EP 0 820 179 A2**
(43) Veröffentlichungstag der Anmeldung: **21.01.1998**
(21) Anmeldenummer: 97110419.5
(22) Anmeldetag: 25.06.1997
(51) Int. Cl.: H04M 3/42, H04Q 3/00

(54) **Verfahren zur Steuerung des mit Hilfe eines an ein Kommunikationssystem angeschlossenen Endgerätes erfolgenden Zugriffs auf die in einem Speichermedium abgelegten Informationen**

(30) Priorität: 17.07.1996 DE 19628887
(71) Anmelder: SIEMENS AKTIENGESELLSCHAFT, 80333 München (DE)
(72) Erfinder: Lindemann, Werner, Dr.-Ing., 45473 Mülheim (DE); Schönfeld, Norbert, Dipl.-Ing., 44145 Dortmund (DE); Spiel, Matthias, Dipl.-Ing., 59439 Holzwickede (DE)

(57) **Zusammenfassung**

Mit Hilfe einer an einem Endgerät aktivierten Prozedur werden über den durch die Vermittlungstechnik geschalteten Signalisierungskanal Aufträge an eine Schnittstelle übermittelt, durch die über die entsprechende Anschlußleitung in einem Speichermedium ein Suchvorgang nach bestimmten Informationen auslösbar ist. Dadurch können z. B. Rufnummern oder andere, teilnehmerspezifizierende Informationen zur Verfügung gestellt werden, die von jedem beliebigen Endgerät interaktiv abgefragt und ausgespeichert werden können. Das Speichermedium kann intern oder auch extern an das Kommunikationssystem angeschlossen sein. Das Speichermedium kann z. B. einen PC darstellen, der entweder an einem Teilnehmeranschluß des Systems oder an eine andere Systemschnittstelle angeschlossen ist. Eine weitere Möglichkeit ist der Anschluß eines Servers, der z. B. auch über eine externe Leitung anrufbar ist. Durch ein spezielles, im System abgelegtes und die Benutzungsoberfläche repräsentierendes Programmodul werden die Endgeräte befähigt interaktiv, d. h. über ein Protokoll mit dem jeweils eingesetzten Speichermedium so kommunizieren.

## Beschreibung

Die Erfindung betrifft ein verfahren zur Steuerung des Zugriffes auf die in einem Speichermedium abgelegten Informationen, zu dem über ein Kommunikationssystem eine Kommunikationsbeziehung von einem daran angeschlossenen Endgerät herstellbar ist, wobei dieses Kommunikationssystem einen Systemspeicher zur Speicherung von Programmodulen und von Daten und Wenigstens einen Systemprozessor mit einem Betriebssystem zur Abarbeitung der Programmodule aufweist und in dem vermittels eines daran angeschlossenen Fernsprechendgerätes bedieneroberflächen-gesteuerte Eingaben erfolgen können und das Endgerät vorzugsweise eine Anzeigeneinrichtung aufweist, für die infolge der von den Endgeräten jeweils übermittelten Anreizinformationen Ausgabeinformationen zur Darstellung an die Anzeigeeinrichtung gebildet werden und wobei die Funktionskomponenten bzw. Schnittstellen des Kommunikationssystems an ein internes Bussystem angeschlossen sind.

Neben den einen verbindungsaufbau und Verbindungsabbau zwischen einem Kommunikationsendgerät und dem Kommunikationssystem zuzuordnenden Prozedurabläufen werden auch weitere Prozedurabläufe, wie sie beispielsweise die Inanspruchnahme von Teilnehmerleistungsmerkmalen bedingen, mit Hilfe einer bestimmten Signalisierungsprozedur gesteuert. In modern konzipierten digitalen Kommunikationssystemen ist man bestrebt, neben der Bereitstellung einer Vielzahl von Leistungsmerkmalen -die auch von der Art und dem Funktionsumfang der verwendeten Endgeräte abhängig sind- auch die von den Benutzern durchzuführenden Prozeduren zu vereinfachen. In einem solchen Kommunikationssystem sind im Rahmen der Bedienungsoberfläche auch Prozeduren implementierbar, bei deren Aktivierung Menüs, Texte und Führungsguittungen zur Verfügung gestellt werden, um Einträge in den Datenspeicher des Systems, beispielsweise in den Kundendatenspeicher zu ermöglichen. Es ist auch möglich, Informationen wie z. B. Rufnumnern entweder lokal in einem Endgerät oder im System zur Verfügung zu stellen. In ersteren Falle sind die Einträge nur vom jeweiligen Endgerät aus zugänglich, während im zweitgenannten Fall z. B. zur Durchführung einer zentralen Kurzwahl ein entsprechender Speicher im System notwendig ist. Es ist auch bekannt, durch eine einem Endgerät individuell zugeordnete Datenverarbeitungseinrichtung, die z. B. in Form eines Personalcomputers realisiert ist, Wahlvorgänge zu initiieren.

Es ist die Aufgabe der Erfindung im Zusammenhang mit der Bereitstellung von Informationen die Betriebsweise zu verbessern.

Diese Aufgabe wird ausgehend von dem im Oberbegriff des Patentanspruches 1 angegebenen Merkmalen durch dessen kennzeichnende Merkmale gelöst.

Das wesentliche der Erfindung liegt darin, daß ein Endgerät, insbesondere ein Systemfernsprecher durch eine spezielle im Systeme abgelegte Benutzungsoberfläche dazu befähigt ist, interaktiv, d. h. über ein Protokoll in einem internen oder auch externen Speichermedium zu suchen. In dieser Aufgabenteilung ist die Benutzungsoberfläche die Schnittstelle, die die Eingabe eines Benutzers interpretiert und umsetzt. Es werden also z. B. Tastendrücke interpretiert und daraus logische Aufträge formuliert. Die Komponenten zur Ausführung dieser Aufträge liegen im Speichermedium. Von diesem, z. B. als Server realisiertem Speichermedium werden Meldungen abgesetzt, die die Komponente "Benutzungsoberfläche" des Systems erkennt, aufbereitet und in einer entsprechenden Form dem Benutzer anbietet. Dies kann beispielsweise in Form von Displayanzeigen erfolgen oder es kann auch unmittelbar aus diesen Meldungen für den Benutzer eine bestimmte Funktion, beispielsweise eine Wahlfunktion eingeleitet werden.

Es wird mit Hilfe der von der systemseitigen Schnittstelle über die das Speichermedium erreichbar ist, im Sinne normierter Meldungen übermittelten logischen Aufträge erreicht, daß diese Aufträge unabhängig von der Art des jeweils kommunizierenden Endgerätes initiierbar sind. Gemäß einer Weiterbildung ist die interaktive Abfrage des Speichermediums durch systemkonforme, vorzugsweise über eine alphanumerische Tastatur des Endgerätes vorgenommenen Eingaben aufgrund der dabei an der Anzeigeeinrichtung des betreffenden Fernsprechendgerätes dargestellten Informationen in Sinne eines Dialogs abwickelbar. Es ist also möglich, durch die Betätigung der bekannten Bestätigungs- bzw. Fortsetzungstaste usw. den gewünschten Speicherinhalt in dem Speichermedium interaktiv zu suchen. Es erfolgt also dynamisch eine Reaktion des Systems auf diese Eingaben. Der Zugriff wird dann jeweils durch die im System ablaufende Benutzungsoberfläche gesteuert.

Die aufgrund eines entsprechenden Suchstrings auslesbaren Speicherinhalte können eine Rufnummer und/oder den zugehörigen Teilnehmer zusätzlich charakterisierende teilnehmerspezifische Einträge oder auch eine speziell sortierte Liste darstellen.

Eine Weiterbildung des Verfahrens sieht vor, daß die durch den jeweiligen Teilnehmer veranlaßte Verarbeitung darin besteht, daß eine aus dem jeweiligen Speichermedium ausgelesene Information eine als Auswahlinformation verwendete Rufnummer bzw. eine an der Anzeigeeinrichtung jeweils angezeigte anderweitige Information darstellt und ggf. einer Druckeinrichtung zum Ausdruck zugeführt wird. Die Übergabe dieser Informationen erfolgt endgeräteunabhängig in Form von logischen bzw. von normierten Meldungen.

Weitere vorteilhafte Ausgestaltungen der Erfindung sind den restlichen Unteransprüchen zu entnehmen.

Zentraler Bestandteil des Kommunikationssystems KS, das ein sogenanntes Nebenstellen-Kommunikationssystem darstellt, ist ein zentrales Koppelfeld KF, über das Endgeräte, von denen die Fernsprechendgeräte FE1 und FEx schematisch angedeutet sind -miteinander bzw. mit zu einem öffentlichen Kommunikationssystem ÖN führenden Leitungen AL verbindbar sind. Das zentrale Koppelfeld KF steht unter dem Steuereinfluß einer zentralen Anlagensteuerung AST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt werden.

Im Kommunikationssystem KS sind Leitungsanschlußeinrichtungen, symbolisiert durch die Leitungsanschlußeinrichtung LT angeordnet. Diese enthalten jeweils Teilnehmeranschlußmodule SLM. Diese Teilnehmeranschlußmodule sind über Teilnehmeranschlußleitungen ASL jeweils mit Endeinrichtungen verbunden. Dies sind beispielsweise die Kommunikationsendgeräte FE1 bis FEx und andere Endgeräte, wie beispielsweise eine Server-Einheit SRE. Es können grundsätzlich unterschiedliche Teilnehmeranschlußmodule vorgesehen sein. Dies sind zum einen Teilnehmeranschlußmodule für den Anschluß analoger Kommunikationsendgeräte und zum anderen Teilnehmeranschlußmodule für den Anschluß unterschiedlich strukturierter digitaler Kommunikationsendgeräte. Ein solches digitales Teilnehmeranschlußmodul ist für den Anschluß einer ganz bestimmten Anzahl von digitalen Kotrmunikationsendgeräten vorgesehen. Die Nachrichtenübertragung erfolgt hierbei z. B. über Nachrichtenkanäle N und die Signalisierung wird über einen zusätzlichen Kanal S übermittelt. Die vom Kommunikationsendgerät beispielsweise dem Endgerät FE1 übermittelten digitalen Sprachinformationen werden ebenfalls über eine Multiplex-Einrichtung MUX zum Koppelfeld KF weitergeleitet. Vermittlungstechnisch gesteuert werden die Leitungsanschlußeinrichtungen LT von der Systemsteuerung AST. Hierbei ist jede Leitungsanschlußeinrichtung über einen Signalisierungskanal SK mit der Systemsteuerung verbunden. Über diesen Signalisierungskanal SK werden die Informationen mit Hilfe der bekannten HDLC-Übermittlungsprozedur ausgetauscht. Die in der Systemsteuerung gebildeten Taktsignale werden über eine Taktleitung TL an die Leitungsanschlußeinrichtungen LT verteilt. Mit der Einheit TG ist angedeutet, daß durch diese Taktsignale zur Verfügung gestellt werden.

Der Zugriff zu einer Amtsleitung AL über die, ggf. als eine von mehreren, das Kommunikationssystem KS beispielsweise mit dem öffentlichen Netz ÖN verbunden ist, erfolgt über die Schnittstelle LS. Diese Schnittstelle beinhaltet beispielsweise ein ISDN-Teil, der z. B. als standardisierte SO-Schnittstelle ausgebildet sein kann. Der Peripherie des Kommunikationssystems wird ergänzt durch eine Singalisierungseinheit SE, die zur Zeichenversorgung des Kommunikationssystems dient. Der zentrale Prozessor CPU der Systemsteuerung hat Zugriff zu den in der Speichereinrichtung SPE abgelegten Daten. Sie besteht grundsätzlich aus den Speicherteilen PROM und RAM. In dem Programmspeicherteil PROM ist das Anlagenbetriebsprogramm und die zu ihm bezüglich der Peripherietechnik, der Betriebstechnik, der Sicherheitstechnik und der Vermittlungstechnik gehörende Programme abgespeichert. Dies ist bezüglich der Vermittlungstechnik durch das Modul VT angedeutet.

In dem Speicherteil RAM ist als Teileinheit der Datenbasis der Speicherbereich KD angedeutet. In diesem sind die Kundendaten, wie Z. B. die den einzelnen Endgeräten FE1 bis FEx zugeteilten Berechtigungen und die Systemkonfiguration abgelegt. In dem Teilbereich SYS sollen die system-bezogenen Daten enthalten sein. Der Speicherteil RAM dient u. a. der Aufnahme von temporären Daten zur Programmablaufsteuerung. Es werden in ihm auch Daten übernommen, die während durch eines durch ein Kommunikationsendgerät initiierten Verbindungsaufbaus oder bei der Inanspruchnahme eines Dienstes bzw. eines Leistungsmerkmals abgefragt werden. So soll beispielsweise in dem Speicherbereich FD jedem Endgerät bzw. jeder Endeinrichtung ein Speicherabschnitt zugeteilt sein, in dem sämtliche endgeräte-bezogene Daten abgelegt sind. Es werden darin Informationen abgespeichert, die die in Anspruch zu nehmenden Leistungsmerkmale oder auch die bereits beanspruchten Leistungsmerkmale betreffen. Sie sind also jeweils als dynamische Datenbasis für die einzelnen Endgeräte bzw. Endeinrichtungen anzusehen. In diesem Speicherbereich FD sind Endgeräte bzw. endeinrichtungs-bezogen u. a. auch Kennungen für das durch die vermittlungstechnischen Abläufe jeweils angeforderte Menü enthalten. Eine derartige Menüleiste wird dann auf der Anzeigeeinrichtung, die z. B. in Form eines alphanumerischen Displays DL an dem betreffenden Endgerät, z. B. FE1 realisiert ist, angeboten. Das darzustellende Menü beinhaltet einen Satz von Optionen, wobei diese einzelne Optionen durch die Komponente "Benutzungsoberfläche" BOF für die Darstellung auf dem Display aufbereitet werden. Der Benutzer hat die Möglichkeit, beispielsweise durch die Betätigung einer Folgetaste FT sich die nächste Option anzeigen zu lassen oder eine angezeigte Option durch die Betätigung einer Bestätigungstaste BT zu aktivieren. In dem Kommunikationssystem KS steht ein Speichermedium zur Verfügung, durch das bestimmte Informationen den am System angeschlossenen Teilnehmer zur Verfügung gestellt werden können. Dies erfolgt z. B. im Zusammenhang mit einer Menüdarstellung über eine von jedem beliebigen Fernsprechendgerät einzuleitende interaktive Abfrage dieses Speichermediums. Als ein solches Speichermedium ist beispielsweise die Server-Einheit SRE vorgesehen. Es ist nun möglich, von einem Endgerät aus über ein Protokoll in den Speicherinhalt dieses Servers wie in einer Datenbank zu suchen. Die Intelligenz, der hierzu benötigten Benutzungsoberfläche liegt im System und die Intelligenz um die aufgenommenen Aufträge auszuführen liegt in diesem Server. Die Schnittstelle SN, über die der Zugriff zu diesem Server SRE erfolgt, ist beispielsweise eine SO-Schnittstelle. An eine solche Schnittstelle könnte auch eine Datenverarbeitungseinrichtung z. B. in Form eines Personalcomputers angeschlossen werden, der dann als solch ein Speichermedium dient. Ist der Server mit einem Upn-Protokoll ausgestattet, so könnte diese Schnittstelle auch eine entsprechende Upn-Schnittstelle sein. Grundsätzlich wäre es auch möglich, sie als normale Leitungsschnittstelle, d. h. als a/b-Schnittstelle auszubilden, die mit Mehrfrequenz-Codezeichen Daten austauscht und Befehle absetzt.

Das jeweils verwendete Speichermedium könnte auch an eine andere Systemschnittstelle, z. B. V.24-Schnittstelle angeschlossen sein.

Insbesondere für eine interaktive Abfrage von Rufnummern kann als Speichermedium auch ein Systemfernsprecher mit lokalen Rufnummernspeichern eingesetzt werden, die über einen Signalisierungskanal vom System aus abgefragt werden können. Ein solcher Rufnummernspeicher ist z. B. für das Fernsprechendgerät FE1 durch die darin integrierte Einheit Sp angedeutet. Grundsätzlich ist es auch möglich ein solches Speichermedium, z. B. in Form eines Servers nicht direkt an das Kommunikationssystem anzuschließen, sondern diesen Server über eine externe Leitung AL zu erreichen. Dies ist im Ausführungsbeispiel durch das Vorhandensein des Servers SRF angedeutet, der über das öffentliche Netz ÖN in der geschilderten Weise abgefragt werden kann.

Es wird im folgenden als Beispiel angenommen, daß als Speichermedium die Server-Einheit SRE an das Kommunikationssystem KS angeschlossen ist. In diesem System ist eine Software abgelegt, die die Oberfläche für die entsprechende Datenbankanwendung darstellt, wenn dieser Server als eine solche Datenbank genutzt wird. Jeder Teilnehmer ist nun der Lage vermittels seines ihm zugeordneten Endgerätes auf diesen Server zuzugreifen, um z. B. mit einer interaktiv von diesem Partnerendgerät gesteuerten Benutzungsoberfläche Informationen aus diesem Server abzuholen. Im Falle von Rufnummern-Informationen können diese Rufnummern auch als Wahlinformationen ausgewählt werden. Es besteht auch grundsätzlich die Möglichkeit sich diese Rufnummern nur anzuzeigen zu lassen oder einen Ausdruck dieser ermittelten Rufnummern und weiterer damit im Zusammenhang stehenden Informationen zu veranlassen.

Die Server-Einheit SRE, die über eine der vorhandenen Teilnehmer-Schnittstellen an das System anschließbar ist, soll als Beispiel Rufnummern-Informationen enthalten. Neben solchen Rufnummern können auch zusätzlich teilnehmer-spezifische Informationen gespeichert sein. Neben diesen kundenspezifischen Einträgen können grundsätzlich jede Art von Informationen in diesem Server abgelegt und interaktiv abgefragt werden. Der Einstieg zur Abfrage des Speicherinhaltes der Server-Einheit SRE erfolgt über eine vom Benutzer eingegebene besondere Prozedur. Eine andere Möglichkeit besteht in der Auswahl eines entsprechendes Menüpunktes einer z. B. auf der Anzeigeeinrichtung DL des betreffenden Endgerätes FE1 darstellbaren Menüleiste. Es werden dabei die im Kommunikationssystem vorhandenen Abläufe, die die vom Teilnehmerendgerät ausgehenden Informationen behandeln und verarbeiten aktiviert. Nach dem Erkennen der Einstiegsinformationen interpretiert die dem Teilnehmerendgerät FE1 zugeordnete Task der Benutzungsoberfläche BOF-FE1 die nachfolgend empfangenen Tastenanreize und leitet sie als normierte Aufträge über die Vermittlungstechnik VT an die peripherie-orientierte Programmkomponente DH-SRE weiter. Diese Programmkomponente erzeugt ausgehend von den empfangenen Anreizen logische Tastendrücke, die als in einem vorgegebenen Protokoll verschlüsselte Meldungen an die Softwarekomponente BOF-FE1 übergeben werden und entsprechend verarbeitbar sind. In Abhängigkeit davon, welches Fernsprechendgerät die Prozedur für die auf den Server bezogene Datenbankwendung einleitet, wird ein unterschiedlicher Task-Index zugeordnet und damit parallele Zugriff mehrerer Fernsprechendgeräte ermöglicht. Die Softwarekomponente 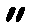 Benutzungsoberfläche 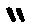 BOF empfängt über die jeweilige Komponente Devicehandler DH, Tastenbetätigungen von der Peripherie. Das Ergebnis wird der vermittlungstechnischen Komponente VT über eine endgeräteunabhängige Schnittstelle zur Verfügung gestellt.

Wenn ein Benutzer in diesem Rufnummernserver einen Suchvorgang auslösen oder gezielt auf eine dort gespeicherte Rufnummer zurückgreifen will, so kann er nach der von ihm vorgenommenen Einstiegsprozedur z. B. eine Option aus dem ihm an der Anzeigeeinrichtung seines Endgerätes angebotenen Menü auswählen. So kann er beispielsweise die für eine solche Auswahl oder auch die für das "Blättern" in dieser Rufnummern-Datenbank angebotene Option aktivieren. Er kann beispielsweise auch einen Suchstring eingeben, der z. B. in verkürzter Form den Namen eines von ihm gewünschten Teilnehmers angibt. Er hat dann die Möglichkeit über diese speziell geführte Benutzungsoberfläche die jeweils eingegebene Information in einem entsprechenden Dialog weiter zu spezifizieren. Dies kann über verschiedene Zwischenschritte erfolgen, um gezielt ganz spezielle Informationen abzurufen. Erfolgt z. B. der Auftrag an die Servereinheit SRE über die Alpha-Tastatur des entsprechenden Endgerätes, so besteht durch Eingabe weiterer Buchstaben die Möglichkeit, die Informationen aus dem jeweils angezeigten Datensatz durch die Betätigung der Folgestaste- bzw. der Bestätigungstaste, weiter einzuschränken. Dies erfolgt dann interaktiv, ausgehend von dem als Suchkriterien an den Server übermittelten alphanumerischen Teilnehmernamen oder einer Kurzwahlkennzahl. Der Zugriff zum Serverinhalt wird auf Grund der vom Benutzer vorgenommenen Tastatureingaben durch die Benutzungsoberfläche gesteuert. Bezogen auf das Endgerät FE1 ist die Komponente BOF-FE1 zuständig, die empfangene Tastendrücke interpretiert und die Aufträge zur Darstellung der Anzeigen an der Anzeigeeinrichtung über eine normierte Schnittstelle formuliert. Die Komponente DH-FE1 ist der auf das Endgerät FE1 bezogene Devicehandler, der von diesem Endgerät die Tastaturbetätigungen aufnimmt und in Richtung System weitergibt bzw. die Informationen aus dem System als Displayanzeigen zur Darstellung bringt. Ersteres ist durch den nach oben weisenden Pfeil und letzteres durch den nach unten weisenden Pfeil symbolisiert. Die Komponente Devicehandler ist grundsätzlich das Interface zur Peripherie. Das bedeutet, daß sie Informationen entsprechend aufnimmt oder solche Informationen liefert. Diese Informationen werden auf der Anzeigeeinrichtung des betreffenden Endgerätes, z. B. FE1, angezeigt und zur Auswahl angeboten. Der angeschlossenen Servereinheit SRE ist als Devicehandler die Komponente DH-SRE zugeordnet. Die Komponente BOF-FE1 kann bezogen auf das Endgerät FE1 über die vermittlungstechnische Komponente VT eine logische Verbindung zwischen diesen Komponenten DH-FE1 und DH-SRE herstellen. Dies kann bezogen auf andere Endgeräte in gleicher Weise erfolgen. Jeder Teilnehmer ist also befähigt, in dieser Servereinheit bestimmte Suchvorgänge anzustoßen. Dies kann auch erfolgen, ohne daß eine abgefragte Rufnummerauswahlinformation ausgegeben wird.

Neben einer Namenssuche können auf die gleiche Weise auch andere Suchaufträge von einem Endgerät aus erfolgen. Zusätzlich zu einer Namens- bzw. Rufnummernsuche können auch im Zusammenhang mit einer gesuchten Rufnummer bzw. eines Teilnehmers diesen Teilnehmer zusätzlich charaktierisierende Einträge, wie z. B. kundenspezifische Einträge auf der Anzeigeeinrichtung des betreffenden Endgerätes dargestellt werden. Der Abbruch einer eingeleiteten Prozedur, mit der also Namen, Rufnummern und Zusatzinformationen vom Endgerät aus abfragbar sind, kann z. B. durch eine entsprechende Endeinformation oder durch einen automatischen Abbruch nach Ablauf einer vorgegebenen Zeit erfolgen.

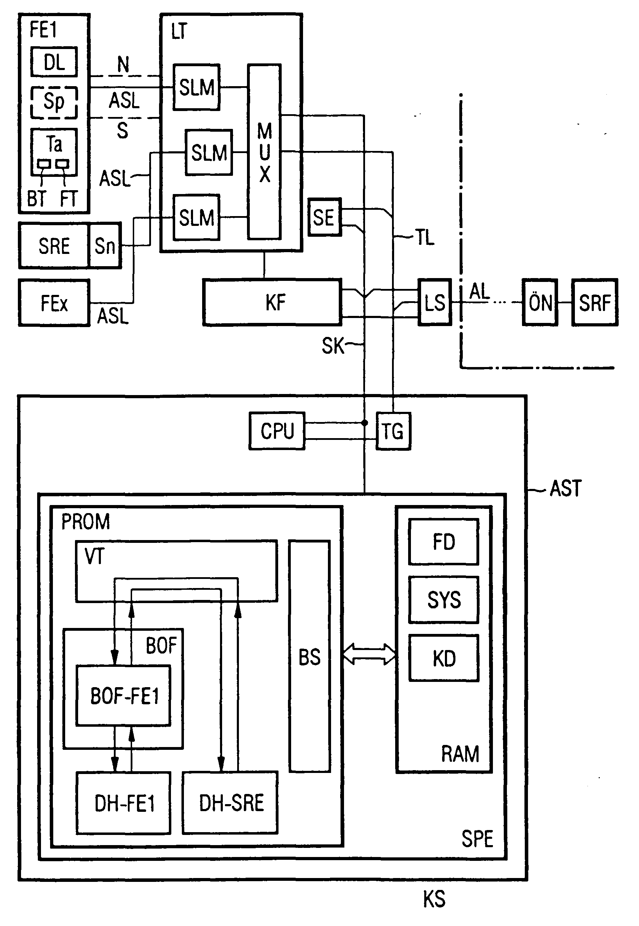

## Patentansprüche

1. Verfahren zur Steuerung des Zugriffs auf die in einem Speichermedium (SRE) abgelegten Informationen, zu dem über ein Kommunikationssystem eine Kommunikationsbeziehung von einem daran angeschlossenen Endgerät (FE1) herstellbar ist, wobei dieses Kommunikationssystem einen Systemspeicher zur Speicherung von Programmodulen und von Daten und wenigstens einen Systemprozessor mit einem Betriebssystem zu Abarbeitung der Programmodule aufweist und in dem vermittels eines daran angeschlossenen Fernsprechendgerätes bedieneroberflächengesteuerte Eingaben erfolgen können und das Endgerät vorzugsweise eine Anzeigeneinrichtung (DL) aufweist, für die infolge der von den Endgeräten jeweils übermittelten Anreizinformationen Ausgabeinformationen zur Darstellung an dieser Anzeigeeinrichtung gebildet werden und wobei die Funktionskomponenten bzw. Schnittstellen des Kommunikationssystems an ein internes BUS-System angeschlossen sind,
**dadurch gekennzeichnet**,
daß durch eine über ein Fernsprechendgerät (FE1) eingegebenen bestimmten Prozedur eine Programmkomponente (BOF-FE1) aktivierbar ist, die eine in der Weise ausgestaltete Benutzungsoberfläche repräsentiert, daß vermittels einer über eine entsprechend ausgebildeten Schnittstelle (DH-Sn) zu dem Speichermedium hergestellte Verbindung daraus interaktiv aufgrund der von einem Fernsprechendgerät (FE1) initiierten Aufträge Informationen bezüglich eines durch die jeweils vorgenommenen Eingaben definierten Speicherinhalts auslesbar und zu dem Kommunikationssystem übertragbar sind, so daß durch die Systemsteuerung eine durch das aktuell beteiligte Teilnehmer-Endgerät (FE1) gezielt zu veranlassende Verarbeitung erfolgen kann.

2. Verfahren nach Anspruch 1,
**dadurch gekennzeichnet**,
daß vermittels der systemseitigen Schnittstelle (-Sn) über die das Speichermedium erreichbar ist, im Sinne normierter Meldungen logische Aufträge übermittelt werden, so daß diese Aufträge unabhängig von der Art des jeweils kommunizierenden Endgerätes oder Systems initiierbar sind.

3. Verfahren nach Anspruch 1 oder 2,
**dadurch gekennzeichnet**,
daß die interaktive Abfrage des Speichermediums durch Systemkonforme, vorzugsweise über die alphanumerische Tastatur (Ta) vorgenommenen Eingaben aufgrund der dabei an der Anzeigeeinrichtung (DL) des betreffenden Fernsprechendgerätes (FE1) dargestellten Informationen im Sinne eines Dialoges abwickelbar ist.

4. Verfahren nach einem der Ansprüchen 1 bis 3,
**dadurch gekennzeichnet**,
daß die auslesbaren Speicherinhalte eine Rufnummer und/oder den zugehörigen Teilnehmer zusätzlich charakterisierende teilnehmerspezifischen Einträge oder auch eine sortierte Liste darstellen.

5. Verfahren nach Anspruch 1,
**dadurch gekennzeichnet**,
daß die durch den jeweiligen Teilnehmer veranlaßte Verarbeitung darin besteht, daß eine aus dem jeweiligen Speichermedium ausgelesene Information eine als Wahlinformation verwendete Rufnummer bzw. eine an der Anzeigeeinrichtung jeweils angezeigte Information darstellt und daß diese gegebenenfalls einer Druckeinrichtung zum Ausdruck zugeführt wird.

6. Verfahren nach einem der Ansprüche 1 bis 4,
**dadurch gekennzeichnet**,
daß das Speichermedium (SRE;SRF) über eine entsprechende Leitungsverbindung vermittels einer internen Teilnehmeranschlußleitung (ASL) an das Kommunikationssystem angeschlossen ist oder über eine externe Verbindungsleitung (AL) erreichbar ist.

7. Verfahren nach Anspruch 1,
**dadurch gekennzeichnet**,
daß das Speichermedium ein integrierter Bestandteil von für weitere Aufgaben heranzuziehenden Einheiten in Form eines mit einer Datenbank ausgerüsteten Personalcomputers oder einer Server-Einheit darstellt, die jeweils über eine entsprechende Schnittstelle und einer Leitungsverbindung erreichbar ist.

8. Verfahren nach Anspruch 1,
**dadurch gekennzeichnet**,
daß das Speichermedium zumindest Teil einer in einem angeschlossenen Systemfernsprechendgerät (FE1) integrierten Speichereinheit (SP) ist, deren Inhalt über einen Signalisierungskanal (S) durch die Systemsteuerung aufgrund der von einem weiteren Endgerät vorgenommenen Eingaben abfragbar ist.
